(19) Europäisches Patentamt
European Patent Office
Office européen des brevets

(11) **EP 1 226 222 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: **00967744.4**

(22) Anmeldetag: **22.09.2000**

(51) Int Cl.$^7$: **C10B 53/02**, C10B 49/16

(86) Internationale Anmeldenummer:
**PCT/EP2000/009275**

(87) Internationale Veröffentlichungsnummer:
**WO 2001/021730 (29.03.2001 Gazette 2001/13)**

(54) **VERFAHREN ZUR VERGASUNG VON ORGANISCHEN STOFFEN UND STOFFGEMISCHEN**

METHOD FOR GASIFYING ORGANIC MATERIALS AND MIXTURES OF MATERIALS

PROCEDE DE GAZEIFICATION DE MATIERES ORGANIQUES ET MELANGES DE MATIERES

(84) Benannte Vertragsstaaten:
**AT BE CH CY DE DK ES FI FR GB GR IE IT LI LU MC NL PT SE**

(30) Priorität: **24.09.1999 DE 19945771**

(43) Veröffentlichungstag der Anmeldung:
**31.07.2002 Patentblatt 2002/31**

(73) Patentinhaber:
• **Mühlen, Dr., Heinz-Jürgen**
**45143 Essen (DE)**
• **Schmid, Dr., Christoph**
**51702 Bergneustadt (DE)**
• **Sonntag, Dr., Thomas-Michael**
**53909 Zülpich (DE)**

(72) Erfinder:
• **MÜHLEN, Heinz-Jürgen**
**45143 Essen (DE)**
• **SCHMID, Christoph**
**51702 Bergneustadt (DE)**

(74) Vertreter: **Schneiders, Josef, Dipl.-Ing.**
**Schneiders & Behrendt**
**Rechtsanwälte - Patentanwälte,**
**Huestrasse 23**
**(Westfalenbankgebäude)**
**44787 Bochum (DE)**

(56) Entgegenhaltungen:
**WO-A-99/31197 BE-A- 533 710**
**DE-A- 4 018 391 DE-B- 1 090 632**
**DE-C- 971 789**

**Beschreibung**

Die Erfindung betrifft ein Verfahren zur Erzeugung eines Produktgases mit hohem Heizwert aus organischen Stoffen oder Stoffgemischen, bei welchem ein im Kreislauf gefahrenes Wärmeträgermedium eine Aufheizzone, eine Reaktionszone, eine Pyrolysezone und eine Trennstufe durchläuft und anschließend in die Aufheizzone zurückgeführt wird, wobei die organischen Stoffe oder Stoffgemische in der Pyrolysezone durch Kontakt mit dem aufgeheizten Wärmeträgermedium in einen festen, kohlenstoffhaltigen Rückstand und Pyrolysegase als flüchtige Phase aufgespalten werden, nach Durchlauf der Pyrolysezone der feste, kohlenstoffhaltige Rückstand in der Trennstufe von dem Wärmeträgermedium abgetrennt wird und die Pyrolysegase mit Wasserdampf als Reaktionsmittel vermischt und in der Reaktionszone durch Abtausch eines Teils der im aufgeheizten Wärmeträgermedium enthaltenen Wärme derart nacherhitzt werden, daß ein Produktgas mit hohem Heizwert entsteht.

Ein gattungsgleiches Verfahren ist aus der DE 971 789 C bekannt. Diese Schrift wird als naheliegenster Stand der Technik angesehen. Das vorbekannte Verfahren dient zur Erzeugung von Stadtgas aus festen Brennstoffen durch Pyrolyse und Vergasung. Die Aufheizung des Wärmeträgermediums in der Aufheizzone erfolgt durch einen Gasbrenner, der mit Fremdenergie befeuert wird. Der bei der Pyrolyse entstehende feste Rückstand wird aus dem System ausgebracht und anderweitig verwendet, wie z.B. zur Kesselfeuerung.

Aus der DE 10 90 632 B ist eine Entgasungsvorrichtung bekannt, die mit einem Dampfkessel gekoppelt ist. Die Entgasung des festen Brennstoffs erfolgt hierbei durch Kontaktierung mit einem heißen Wärmeträgermedium in einem Wanderbettreaktor. Der entgaste Brennstoff wird verfeuert und die Rauchgase zunächst unter Abgabe eines Teils ihrer fühlbaren Wärme zur Dampferzeugung verwendet. Nach Abkühlung unterhalb des Aschenschmelzpunktes werden die Kesselrauchgase dann durch den oberen Teil des Entgasungsreaktors geleitet, in dem das Wärmeträgermedium nach Verlassen der Entgasungsstufe zurücktransportiert wurde, und wo es in Form eines Wanderbetts vorliegt.

Aus der US-PS 4,568,362 [1] ist ein Verfahren zur Vergasung von organischen Stoffen und Stoffgemischen bekannt, bei dem die organischen Stoffe in einen Pyrolysereaktor geleitet werden, in dem diese Stoffe mit einem Wärmeträgermedium in Kontakt kommen, wodurch eine schnelle Pyrolyse stattfindet, bei der diese Stoffe in Pyrolyseprodukte, d.h. Pyrolysegase mit kondensierbaren Stoffen und festen kohfenstoffhaltigen Rückstand umgesetzt werden. Die nötige Wärmeenergie für die Pyrolyse wird durch Verbrennen des festen kohlenstoffnaltigen Rückstandes erzeugt. Die teerhaltigen Pyrolysegase werden in einer zweiten Reaktionszone derart Crackreaktionen und Reaktionen mit Wasserdampf unterworfen, daß ein Produktgas mit hohem Heizwert erhalten wird.

Bei diesem Verfahren erfolgt sowohl die Pyrolyse, als auch die Verbrennung des festen, kohlenstoffhaltigen Rückstandes in einer Wirbelschicht, Im oberen Teil des Pyrolyse- Wirbelschichtreaktors ist eine Reaktionszone für die teerhaltigen Pyrolysegase vorgesehen. Das Wärmeträgermedium wird zusammen mit dem festen kohlenstoffhaltigen Rückstand zum Teil über den Reaktorkopf des Pyrolyse- Wirbelschichtreaktors und der restliche Anteil über eine Leitung, die an der oberen Wirbelschichtgrenze angeordnet ist, ausgetragen und der Wirbelschichtfeuerung zugeführt. Dort wird der feste kohlenstoffhaltige Rückstand verbrannt und das Wärmeträgermedium aufgeheizt. Das aufgeheizte Wärmeträgermedium und die Asche werden zusammen mit dem Abgas aus der Wirbelschichtfeuerung ausgetragen und in einem oberhalb des Pyrolyse- Wirbeischichtreaktors angeordneten Gas-Feststoff-Abscheider abgetrennt und der Reaktionszone des Pyrolysereak-tors zugeführt, von der sie wieder in die Wirbelschicht des Pyrolysereaktors fallen (Wärmeträgermedium-Kreislauf).

Das Betreiben dieser Wirbelschichten ist jedoch sehr aufwendig, und eine Beeinflussung der Reaktionen der Pyrolysegase in der Reaktionszone ist kaum möglich. Zudem muß in der Reaktionszone hoch überhitzter Wasserdampf eingesetzt werden, was wiederum den Einsatz aufwendig aufbereiteten Wassers voraussetzt.

Aus der DE-PS 197 55 693 [2] ist ein Verfahren zur Vergasung von organischen Stoffen und Stoffgemischen bekannt, bei dem die organischen Stoffe in einem Wanderbettreaktor mit einem Wärmeträgermedium in Kontakt gebracht werden, wodurch eine schnelle Pyrolyse stattfindet, bei der die organischen Stoffe einesteils in einen kohlenstoffhaltigen, festen Rückstand, andernteils in ein aus kondensierbaren, flüchtigen und gasförmigen Bestandteilen bestehendes Pyrolysegas umgesetzt werden.

Danach werden der Wärmeträger und der Pyrolysekoks einer Verbrennung zugeführt, in welcher zum einen der kohlenstoffhaltige Rückstand verbrannt, zum anderen das Wärmeträgermedium aufgeheizt wird, bevor es wieder der Pyrolyse zugeführt wird.

Das teerhaltige Pyrolysegas wird nach Zufügung eines Reaktionsmittels - in der Regel Wasserdampf - in einer als indirekter Wärmetauscher ausgeführten, zweiten Reaktionszone derart nacherhitzt, daß ein Produktgas mit hohem Heizwert erhalten wird, wobei die indirekte Beheizung dieses Wärmetauschers durch die Verbrennungsabgase unter deren Abkühlung erfolgt. Die Asche wird nach der Feuerung aus einem Teilstrom des Gemisches aus Wärmeträger und Asche des festen, kohlenstoffhaltigen Rückstandes mechanisch vom Wärmeträger abgetrennt, abgekühlt und ausgeschleust.

Dieses Verfahren weist jedoch einige Aspekte auf, die eine Vorrichtung zur Durchführung dieses Verfahrens aufwendig und teuer machen und sowohl den Betrieb als auch die Verfügbarkeit nachteilig beeinflussen können: Zum ersten wird der Wärmeträger im aufgeheizten Zustand von der Verbrennung zurück in die Pyrolyse gefördert, d.h. bei einer Temperatur weit oberhalb der Pyrolysetemperatur, die mit 550 - 650 °C angegeben wird. Dadurch muß auf werkstofflich und mechanisch besonders aufwendige Förderorgane zurückgegriffen werden. Femer muß, insoweit der aufgeheizte Wärmeträger noch mit Asche vermischt ist, mit Erweichung der letzteren und damit Verbakkungsproblemen gerechnet werden. Zum zweiten erfordert der verwendete, indirekte Wärmetauscher aufgrund seiner Arbeitsbedingungen - beiderseits Temperaturen 500 - 1.000 °C, einerseits reduzierende Bedingungen, stark korrosive Bestandteile sowohl im Pyrolyse- und Produktgas als auch im Verbrennungsabaas - sehr aufwendige Werkstoffe und aufgrund möglicher Ascheerweichung ein zusätzliches. unter Umständen aufwendiges Abreinigungssystem. Die Gefahr der Ascheanbackung im Wärmetauscher setzt auch dem Betrieb und der Gestaltung der Feuerung enge Grenzen. Eine weitere Schwierigkeit besteht im Zumischen von Dampf zu den Pyrolysegasen: Entweder der Dampf wird mit großem Aufwand hoch überhitzt oder man erhält eine Absenkung der Temperatur, die zu Kondensation von Teer und damit zu Verbackungsproblemen führen kann. Schließlich sind Situationen denkbar, in denen ein definierter Wärmeübergang an das wieder aufzuheizende Wärmeträgermedium in der Feuerung nicht gewährleistet werden kann. So ist zu befürchten, daß sich der Pyrolysekoks und das Wärmeträgermedium in der Feuerung entmischen, so daß beispielsweise im Fall einer Rostfeuerung der Pyrolysekoks oben auf der Schicht abbrennt, während das Wärmeträgermedium sogar noch durch die von unten anströmende Rostluft abgekühlt wird.

Der Erfindung liegt die Aufgabe zugrunde, ein einfach durchzuführendes Verfahren zur Erzeugung eines hochwertigen, unverdünnten und heizwertreichen Produktgases mit geringem, apparativem Aufwand zur Verfügung zu stellen, bei dem der Einsatz von Wirbelschichten oder Wärmetauschern mit beidseitig hoher Temperatur vermieden wird, und bei dem der Wärmeübergang aus der Feuerung an das Wärmeträgermedium in besonders definierter Weise erfolgt.

Die Erfindung löst dieses Problem ausgehend vom Verfahren gemäß Gattungsbegriff dadurch, daß

a) der Wasserdampf den Pyrolysegasen in der Pyrolysezone zugemischt wird,

b) der gesamte feste, kohlenstoffhaltige Rückstand in einer gesonderten Feuerung zugeführt und dort verbrannt wird,

c) und die heißen Abgase dieser Feuerung durch eine in der Aufheizzone befindliche Schüttung des Wärmeträgermediums geführt werden, wobei ein großer Teil der fühlbaren Wärme in definierter Weise an das Wärmeträgermedium abgegeben werden.

Ein Vorteil des Merkmales a besteht darin, daß bei dieser Art der Wasserdampfzuführung der Wasserdampf sich zusammen mit dem entstehenden Pyrolysegas erwärmt, so daß bei der Mischung von Wasserdampf und Pyrolysegas keine Kondensationserscheinungen, Rußbildungen und dergleichen auftreten können. Dieses Phänomen würde auftreten, wenn der Wasserdampf unmittelbar dem wesentlich heißeren Pyrolysegas zugeführt würde.

Nach Merkmal b wird die nach Merkmal a geschaffene ausreichende Menge an festen Rückständen in einer gesonderten Feuerung verfeuert, die gezielt so gefahren werden kann, daß eine ausreichende Menge an heißen Abgasen entsteht, welches anschließend gemäß Merkmal c durch die in der Aufheizzone befindliche Schüttung des Wärmeträgermediums geführt wird.

Die drei Schritte a, b und c wirken synergistisch zusammen und erzielen bei einem Verfahren gemäß Gattungsbegriff ein besonders hohes Ausbringen an Produktgas und kommen zugleich ohne Einspeisung von Fremdenergie aus.

Ähnlich wie in [2] wird der Grundgedanke weiterverfolgt, das Verfahren in drei einfach durchzuführende Verfahrensschritte aufzuteilen: Eine schnelle Pyrolyse, Gewinnung des Produktgases aus den Pyrolysegasen nach Zumischung von Prozeßdampf in homogenen Gasphasenreaktionen unter Wärmezufuhr, Erzeugung der für die Pyrolyse und die Gasphasenreaktionen benötigten Wärme durch Verbrennen des Pyrolysekokses, eines festen, kohlenstoffhaltigen Rückstandes. Eine wesentliche Weiterung stellt jedoch der Gedanke dar, die Wärme der Feuerung in definierter Weise und erzwungen an das Wärmeträgermedium zu übertragen. Bringt man nämlich, wie in [2] beschrieben, den Pyrolysekoks und das Wärmeträgermedium als Gemisch in die Feuerung ein, so muß damit gerechnet werden, daß sich beispielsweise auf einem Verbrennungsrost das Wärmeträgermedium und der Pyrolysekoks entmischen, so daß während der Verbrennung das Wärmeträgermedium nicht nur ungenügend aufgeheizt, sondern sogar noch durch die von unten den Rost durchströmende Verbrennungsluft gekühlt wird. Lediglich in einem Drehrohrofen oder einer Wirbelschicht ist eine definierte und erzwungene Wärmeübertragung denkbar, da hier die Feststoffe über die schürende Wirkung eines Rostes hinaus intensiv durchmischt werden. Dabei ist jedoch ein Drehrohrofen eine sehr teure Feuerung mit schlechter Luftzumischung, während aus den vorgenannten Gründen eine Wirbelschicht nicht in Betracht kommt.

Erfindungsgemäß wird daher unmittelbar nach Verlassen des Pyrolysereaktors das Gemisch aus dem Pyrolysekoks und dem Wärmeträgermedium aufgetrennt, und der Pyrolysekoks in die Feuerung verbracht, während das Wärmeträgermedium in eine Aufheizzone gefördert wird, in der es als Schüttung von heißem Rauchgas durchströmt und so definiert aufgeheizt wird. Durch die damit erreichte Entkoppelung der Verbrennung des Pyrolysekokses einerseits und der Aufheizung des Wärmeträgermediums andererseits wird zweierlei erreicht: Zum einen kann die Verbrennung des Pyrolysekokses vollständig den Erfordernissen dieses Brennstoffs angepaßt werden, daß heißt, grundsätzlich kommt wieder jeder Feuerungstyp in Betracht. Zum ändern kann die Aufheizzone des Wärmeträgermediums in einen beliebigen Punkt einer Anlage nach dem erfindungsgemäßen Verfahren verlagert werden, so daß an die Stelle des aufwendigen, mechanischen Transportes des auf maximale Prozeßtemperatur aufgeheizten Wärmeträgermediums lediglich die vergleichsweise einfache Förderung eines heißen Abgases aus einer Feuerung und der Transport des Wärmeträgermediums mit der niedrigsten Prozeßtemperatur - der Sockeltemperstur nach Verlassen des Pyrolysereaktors - in die Aufheizzone tritt.

Erfindungsgemäß wird die Pyrolyse des organischen Stoffes in einem Reaktor durchgeführt, der bei größtmöglicher, apparativer Einfachheit und robuster Betriebsweise den Übergang der für die Aufheizung, Trocknung und Pyrolyse notwendigen Wärme auf möglichst effektive Weise erlaubt. Damit kommt in der Regel ein Wanderbettreaktor oder eine Drehtrommel für diese Aufgabe in Frage. Die Pyrotysetemperatur liegt dann vorzugsweise in einem Bereich zwischen 500 und 650 °C.

Die Art der Trennung von Pyrolysekoks und Wärmeträgermedium hängt von der Beschaffenheit des Wärmeträgermediums ab und kann auf verschiedene Weise erfolgen. Eine mechanische Trennung kann beispielsweise mit einer zweistufigen Siebung erfolgen. Günstig wirkt sich dabei aus, daß die Temperatur der zu trennenden Medien nur ca. 500 - 600 °C beträgt, so daß auf marktgängige Werkstoffe zurückgegriffen werden kann. Die Trennung durch Siebung in zwei Stufen kommt dann in Betracht, wenn das Wärmeträgermedium aus formbeständigen Partikeln innerhalb eines engen Komgrößenspektrums besteht. Dabei wird der Wärmeträger als Mittelgut abgezogen, während der Pyrolysekoks als Grob- und Feingut abgezogen wird. Solange die beiden Siebschnitte nahe genug beisammen sind, gelangt anteilig recht wenig Pyrolysekoks in das Wärmeträgermedium, wo es in der Regel nicht stört. Eine weitere Möglichkeit ist die Benutzung eines Wärmeträgers mit magnetischen Eigenschaften, etwa Stahlkugeln. Diese können mit Hilfe eines Magneten aus der Mischung abgetrennt werden. Hierbei ist allerdings anzumerken, daß die magnetische Abscheidung heißer Schüttgüter noch nicht mit marktüblichen Komponenten bewerkstelligt werden kann. Schließlich bietet sich als Möglichkeit die Windsichtung an, wenn das Wärmeträgermedium eine ausreichende Dichte aufweist. Als Sichterfluid bietet sich dabei die Verbrennungsluft an, vorzugsweise allerdings aus Sicherheitsgründen ein Teilstrom zurückgekreisten Rauchgases. Es empfiehlt sich in einem solchen Fall, die Feuerung sehr nahe bei der Trennstufe anzuordnen. Die Feuerung sollte dann vorteilhaft Gebrauch von der Fluidisierung bzw. Dispersion des Brennstoffs im Trägergas machen, wie zum Beispiel eine Zyklonfeuerung.

Durch die Trennung von Wärmeträgermedium und Pyrolysekoks ist nunmehr der Feuerungstyp nahezu unerheblich. Es gelten jedoch einige Randbedingungen: Zum einen ist bei gegebener Temperatur des Reformings das Rauchgas am Ende der Feuerung mit einer Temperatur abzugeben, die die Wärmeverluste auf dem Wege zur Aufheizzone, die Grädigkeit der Wärmeübertragung an das Wärmeträgermedium innerhalb der Aufheizzone und die Grädigkeit des Wärmeträgers beim Wärmeübergang in der zweiten Reaktionszone während des Reformings berücksichtigt. Beträgt beispielsweise die Temperatur des Reforming 1.000 °C, dann sollte der Wärmeträger bei Eintritt in diese Zone ca. 1.050 °C heiß sein. Bei entsprechender Auslegung der Aufheizzone kann dies mit 1.075 °C heißem Rauchgas erzielt werden. Um die Verluste des Weges von der Feuerung zu dieser Aufheizzone abzudekken, muß das Abgas beim Verlassen der Feuerung etwas heißer sein, also beispielsweise 1.100 °C. Zum andern müssen vielfach bezüglich des mineralischen Anteils des Pyrolysekokses bestimmte Randbedingungen eingehalten werden. So braucht zwar grundsätzlich ein Schmelzen oder Versintem der Asche nicht ausgeschlossen zu werden, aber die Asche als Produkt kann einen trockenen Abzug der Asche unter Vermeidung jeglicher Erweichung erforderlich machen, beispielsweise, wenn Hühnermist vergast werden, und die erzeugte Asche als hochwirksamer, wertvoller Dünger verwendet werden soll. In solchen Fällen kann zum Beispiel gestufte Verbrennung mit unterstöchiometrischem Betrieb eingesetzt werden, bei der erst durch Zufügung von Sekundärluft der vollständige Ausbrand und damit die notwendige Temperatur erzeugt wird. Noch zu erwähnen ist, daß in Fällen, in denen der gebildete Pyrolysekoks nicht zur Erzeugung der Prozeßwärme ausreicht, Produktgas zugefeuert werden kann.

Die zweite, wesentliche Ergänzung stellt die nunmehrige Einbeziehung der zweiten Reaktionszone in den Wärmeträgerkreislauf dar: Die Reformierung geschieht in direktem Kontakt mit dem Wärmeträgermedium nach den bekannten Reaktionen mit Wasserdampf, beispielsweise

$$C_nH_m + n\,H_2O \rightarrow n\,CO + (m/2 + n)\,H_2$$

Dadurch werden Anbackungen infolge von möglicher Rußbildung und anderen Crackprozessen nunmehr tolerierbar, da wegen der Umwälzung des Wärmeträgermediums die wärmeübertragenden Oberflächen immer wieder regeneriert werden. Die Folge der Einbeziehung der zweiten Reaktionszone in den Wärmeträgerkreislauf ist eine erhebliche Vergrößerung des Wärmeträgerkreislaufes.

Das Verfahren eröffnet erfindungsgemäß mindestens zwei prinzipielle Möglichkeiten der Führung des Wärmeträgerkreislaufes. Bezüglich des Wärmeträgers können die zweite Reaktionszone und der Pyrolysereaktor hintereinander oder parallel geschaltet sein. Der wesentliche Vorteil der Hintereinanderschaltung ist die apparative Einfachheit Die Aufheizzone, die zweite Reaktionszone und der Pyrolysereaktor sind untereinander angeordnet, so daß sich das Wärmeträgermedium schwerkraftgetrieben von oben nach unten durch die Anordnung bewegt. Die Pyrolyse wird gegenüber der in [2] beschriebenen Anordnung insoweit verändert, als daß nun mit sehr viel mehr Wärmeträgermedium mit allerdings deutlich geringerer Temperatur die Pyrolyse durchgeführt werden muß. Tritt zum Beispiel das Wärmeträgermedium mit 1.050 °C in die zweite Reaktionszone zum Zweck des Reforming ein, so verläßt es diese mit nur noch ca. 750 °C. Bei der Parallelschaltung ändert sich die Pyrolysestufe gegenüber der in [2] beschriebenen Anordnung nicht. Infolge der Aufteilung des heißen Wärmeträgerstromes auf Pyrolysereaktor und zweite Reaktionszone und der anschließenden Zusammenführung ist allerdings mit höherem apparativem Aufwand zu rechnen. Daher ist die Paraltelschaltung in den Fällen zu bevorzugen, in denen die Berührung des Einsatzstoffes mit besonders heißem Wärmeträgermedium vorteilhaft ist.

Schließlich soll noch auf die Zumischung von Prozeßdampf zu den Pyrolysegasen vor dem Reforming in der zweiten Reaktionszone eingegangen werden: Diese hat im Überschuß bezüglich der zu erwartenden homogenen Gasphasenreaktionen zu erfolgen, da nur so eine mögliche Rußbildung konsequent unterdrückt werden kann. Ein Anhaltspunkt hierfür besteht in der Einhaltung einer gewissen Wasserdampfkonzentration im frischen Produktgas, nämlich beispielsweise 20 Vol.-% oder mehr. Andererseits ist zu erwarten, daß eine Mengenregelung der Prozeßdampfzugabe mit einer Wasserdampfkonzentration als Meßgröße sehr aufwendig und teuer sein dürfte. Besser dürfte die Einstellung eines festen Wertes sein, der über eine ohnehin möglicherweise vorhandene Mengenmessung leistungsabhängig geführt wird. Eine Gestaltungsmöglichkeit des erfindungsgemäßen Verfahrens, die hier in jedem Fall erwähnt werden soll, besteht in der Wahl des Ortes der Vermischung des Prozeßdampfes mit dem Pyrolysegas. Diese muß zwar spätestens vor Eintritt in die zweite Reaktionszone, den Reformer, erfolgen, kann aber stromaufwärts in den Pyrolysereaktor und dort beliebig innerhalb des Pyrolysereaktors verlagert werden bis an dessen unteres Ende. Mit dem unteren Ende des Pyrolysereaktors ist dabei der Austritt des Gemisches aus Wärmeträgermedium und dem festen, kohlenstoffhaltigen Rückstand gemeint.. Hierdurch ändert sich zwar die Aufteilung des Wärmeeinsatzes zwischen Pyrolyse und Reforming, aber letztlich ist das Spülen der Pyrolyse mit Dampf bei Dampfzugabe in der Nähe des feststoffseitigen Austritts aus dem Pyrolysereaktor in mehrerlei Hinsicht vorteilhaft: Zum ersten wird so die Temperatur des Pyrolysegases auf dem Weg in die zweite Reaktionszone an keiner Stelle abgesenkt, so daß nicht mit Kondensation zu rechnen ist. Zum zweiten ist bekannt [3], daß die Ausbeute flüchtiger Bestandteile bei der Pyrolyse von Biomassen durch Spülen mit Wasserdampf erhöht werden kann. Dies kann vorteilhaft sein, da eine zu hohe Ausbeute an festem Pyroloseprodukt über den Wärmebedarf des Verfahrens hinaus die Ausbeute an Produktgas und - damit zusammenhängend - den Kaltgaswirkungsgrad schmälert. Schließlich und zum dritten wird hierdurch einer möglichen Leckage von Pyrolysegas in Richtung der Trennstufe für Wärmeträgermedium und Pyrolysekoks vorgebeugt.

Eine vorteilhafte Weiterbildung des erfindungsgemäßen Verfahrens besteht darin, daß ein Teil der Pyrolysegase oder des Produktgases in der Feuerung für den festen, kohlenstoffhaltigen Rückstand oder in einer separaten Feuerung verbrannt und die dabei freigesetzte Wärme in der Pyrolysezone und der Reaktionszone benutzt wird.

Als Wärmeträgermedium sind insbesondere feuerfeste Stoffe wie Sand, Kies, Split, Aluminosilikat, Korund, Grauwacke, Quarzit oder Cordeirit geeignet. Ebenso eignen sich Formkörper aus metallischen, bevorzugt magnetischen Materialien oder nichtmetallische Keramikmaterialien, Sintermaterialien oder Eisenerzpellets als Wärmeträgermedium.

Zumindest ein Teil der Gesamtheit des eingesetzten Wärmeträgermediums kann aus einem in der Reaktionszone katalytisch aktiven Material bestehen.

Bisher wurde das erfindungsgemäße Verfahren als ein kontinuierlicher Fließprozess beschrieben. Gleichwohl ist es möglich, das Verfahren zur Vergasung von organischen Stoffen diskontinuierlich oder schubweise durchzuführen. Insbesondere kann der organische Stoff, das Wärmeträgermedium, der feste, kohlenstoffhaltige Rückstand oder das Gemisch aus den beiden letztgenannten Stoffen diskontinuierlich oder schubweise gefördert werden.

Neben dem Wärmeträgermedium kann ein stark basischer, fester Stoff durch die Pyrolysezone geleitet werden. Dieser wird anschließend ebenfalls vom Wärmeträgermedium getrennt und entweder durch die Feuerung oder unmittelbar nach draußen geleitet. Als fester, stark basischer Stoff ist beispielsweise Calciumoxid, Calciumhydroxid oder Calciumcarbonat denkbar.

Das Verfahren kann dadurch weitergebildet werden, daß das Produktgas abgekühlt und das dabei entstehende Kondensat gereinigt und zur Erzeugung des Wasserdampfes wieder verwendet wird. Alternativ kann das Kondensat der Feuerung, dem Wärmeträgermedium oder dem festen, kohlenstoffhaltigen Rückstand zum Zwecke der Eindampfung und Verbrennung der darin enthaltenen, verbrennlichen Anteile zugegeben werden.

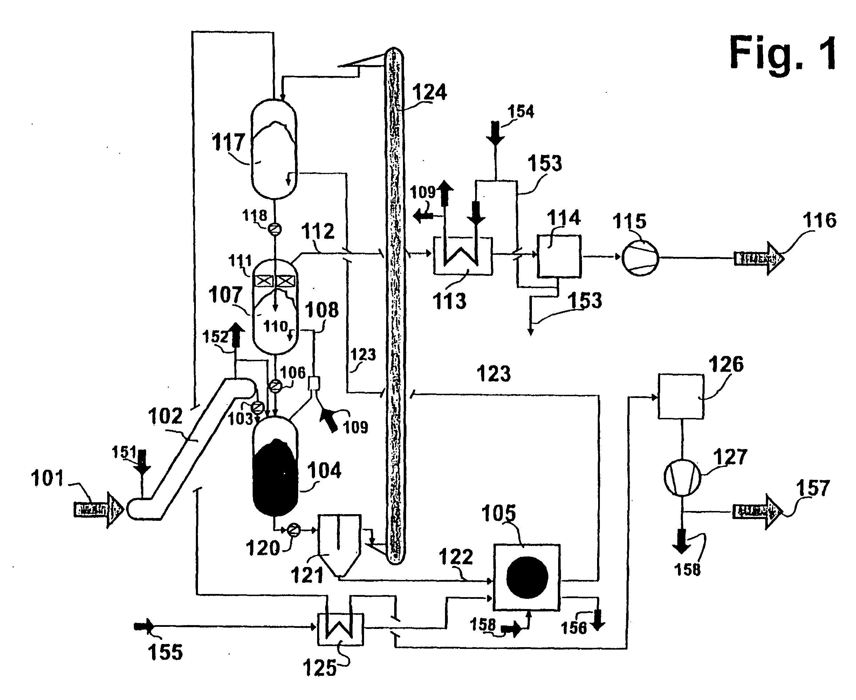

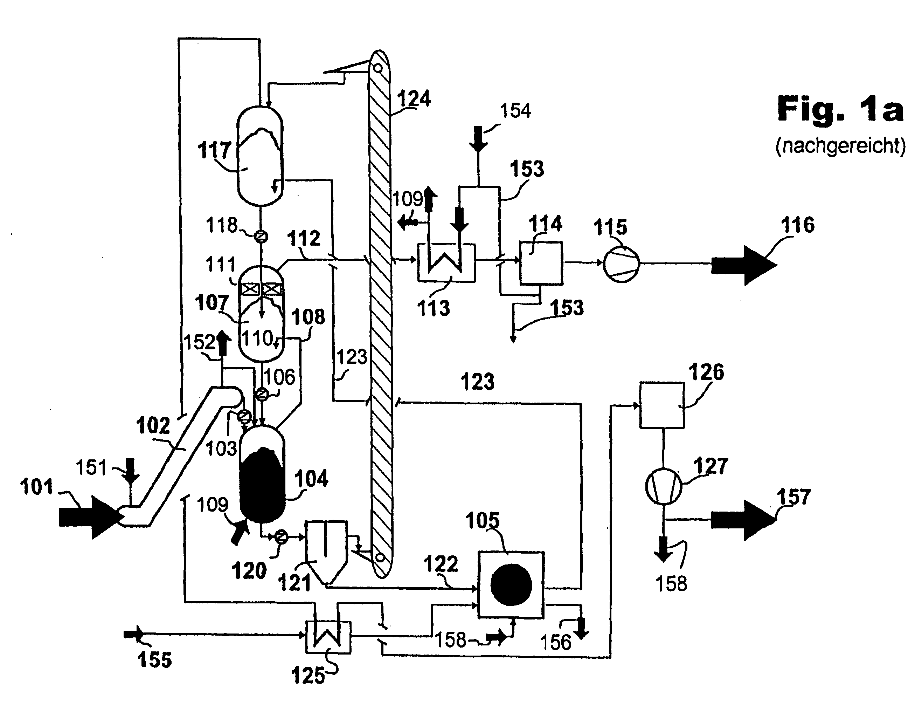

Eine Anlage zur Durchführung des erfindungsgegenständlichen Verfahrens ist in der nachgereichten **Figur 1a** symbolisch dargestellt.

Fig. 1 zeigt eine Modifikation des Erfindungsgegenstandes. Es handelt sich hierbei um die weiter oben dargestellte Serienschaltung, bei der von oben nach unten die Aufheizzone, die zweite Reaktionszone (Reformer) und der Pyrolysereaktor hintereinandergeschaltet sind. Der Einsatzstoff 101 wird über eine Fördereinrichtung 102 und die Schleuse 103 in den Pyrolysereaktor 104 geleitet Die Fördereinrichtung 102 ist als Förderschnecke, Bandförderer oder ähnliches ausgeführt und kann beheizt sein, wobei Niedertemperaturwärme 151 aus der Abhitzenutzung des Abgases und des Produktgases (siehe weiter unten) mit Vorteil - nämlich zur Erhöhung des Gesamtwirkungsgrades - eingesetzt werden kann. Die Brüden 152 werden, wenn es sich um ein offenes System handelt, in die Umgebung abgegeben, ansonsten entweder dem Pyrolysereaktor 104 oder der Feuerung 105 zugegeben. Die Zugabe in den Pyrolysereaktor 104 hat den Vorteil, daß weniger Prozeßdampf zugeführt werden muß. Technisch einfacher ist jedoch die Zugabe in die Feuerung 105, da diese in einem leichten Unterdruck betrieben wird. Der Pyrolysereaktor 104 ist vorzugsweise als zylindrischer Schacht ausgeführt Neben dem Einsatzstoff fällt hier hinein auch das Wärmeträgermedium, von der zweiten Reaktionszone (Reformer) 107 kommend, über die Schleuse 106. Diese ist von beliebiger Bauart, vorteilhaft jedoch als Zellenradschleuse oder Taktschubschleuse ausgeführt, und braucht nicht gasdicht zu sein.

Zunächst werde der weitere Weg der ausgetriebenen Flüchtigen beschrieben. Diese verlassen den Pyrolysereaktor 104 im Gemisch mit dem zugeführten Prozeßdampf 109 über eine separate Leitung 108 hin zur zweiten Reaktionszone 107. Grundsätzlich wäre auch der Weg über die Schleuse 106 und damit der Wegfall der separaten Leitung 108 möglich, nämlich dann, wenn diese sich permeabel ausführen ließe dergestalt, daß sie für Gas zu jeder Zeit unbeschränkt durchlässig ist, während das Wärmeträgermedium nur dosiert oder im Rahmen des Schleusvorganges getaktet hindurchtreten kann. Während nämlich das Wärmeträgermedium nur dosiert in den Pyrolysereaktor 104 eintreten darf mit der Möglichkeit, den Zufluß ganz zu unterbrechen, muß stets die gesamte Pyrolysegasmenge nebst dem zugemischten Prozeßdampf 109 ungehindert entweichen können. Durch eine entsprechende Gestaltung des Bodens der zweiten Reaktionszone (Reformer) 107 wird der Strom der Flüchtigen aus der Pyrolyse auf einem möglichst langen Weg durch die im Reformer befindliche Schüttung aus Wärmeträgermedium 110 geleitet. Letztere bewegt sich im Gegenstrom zu dem unter Aufheizung zu Produktgas reagierenden Gasgemisch von oben nach unten und kühlt sich dabei ab. Im oberen Teil des Reformers 107 kann sich zur Unterstützung des Umwandlungsvorganges der Katalysator 111 in Form einer Schüttung oder, bevorzugt, einer Wabenpackung befinden. Es ist wichtig, daß sich der Katalysator 111 am oberen, heißen Ende des Reformers 107 befindet, da das entstehende Produktgas an dieser Stelle noch ungereinigt ist und folglich in Abhängigkeit vom Einsatzstoff 101 noch eine Reihe von Katalysatorgiften wie etwa Schwefel enthalten kann, viele Katalysatoren wie z.B. solche auf Nickelbasis, jedoch bei hoher Temperatur unempfindlicher werden und sogar regeneriert bzw. "freigebrannt" werden können. Dies könnte im Reformer 107 sehr einfach z.B. durch von Zeit zu Zeit erfolgende, geringe Luftzumischung erreicht werden, wobei allerdings in dieser Zeit eine Einbuße der Prcduktgasqualität in Kauf zu nehmen wäre. Nach oben verläßt der Produktgasstrom 112 den Reformer 107. An dieser Stelle liegt gleichzeitig die höchste Temperatur des gesamten Pyrolysegas- bzw. Produktgaspfades vor. so daß die fühlbare Wärme des Produktgasstromes 112 auf jeden Fall genutzt werden sollte. Dies kann vorteilhaft innerhalb des Abhitzekessels 113 geschehen. Zumindest ein Teil des dort erzeugten Dampfes kann dann als Prozeßdampf 109 dem Prozeß wieder zugeführt werden. Nach der Abhitzenutzung tritt das rohe Produktgas in die Reinigungs- und Konditionierungsstufe 114 ein, deren Wirkungsweise dem nachfolgenden Einsatzzweck des Produktgases angepaßt und an sich bekannt ist. In der Reinigungsstufe 114 ist gleichzeitig eine Konditionierung des dort in der Regel durch Abkühlung des Produktgases erhaltenen, wäßrigen Kondensates enthalten. Die Einstellung des Drucks im Pyrolysereaktor 104 - vorzugsweise leichten Überdruck - sowie den Transport des Produktgases und seiner Vorläufer übernimmt der Ventilator 115. Hinter dem Ventilator 115 verläßt der gereinigte Produktgasstrom 116 die Anlage. Der ggf. konditionierte Kondensatstrom 153 kann nun dem Abhitzekessel 113 als Speisewasser zugeführt oder in der Feuerung 105 eingedampft werden, so daß grundsätzlich eine abwasserfreie Führung des Gesamtprozesses möglich ist. Eine Möglichkeit, das Kondensat der Feuerung zuzuführen, besteht darin, daß das Kondensat der weiter unten beschriebenen Trennstufe 121 zugeführt und unter Abkühlung des Wärmeträgers oder des kohlenstoffhaltigen Rückstandes eingedampft wird, und die Brüden der Feuerung zugeführt werden. Soll die fühlbare Wärme sehr weitgehend genutzt, und ggf. Dampf an exteme Verbraucher abgegeben werden (worunter auch die exteme oder ggf. im Förderer 102 interne Konditionierung des Einsatzstoffes zählt), dann empfiehlt sich der alleinige Einsatz von Frischwasser 154 als Speisewasser, während das Kondensat 153 möglichst komplett verworfen oder "verbrannt" wird.

Im folgenden soll der Weg des Wärmeträgermediums und des Pyrolysekokses weiter verfolgt werden. Das Gemisch aus Wärmeträgermedium und Pyrolysekoks tritt durch die Schleus- und Fördereinheit 120 in die Trennstufe 121 ein. Deren Wirkweise - mechanisch durch Siebung oder Sichtung oder magnetisch - wurde bereits weiter oben beschrieben. Danach gelangt der abgetrennte Pyrolysekoksstrom 122 - am besten unverzüglich - in die Feuerung 105. Dort wird er mit der Verbrennungsluft 155 zu einem heißen Abgas verbrannt, welches über die Heißgasleitung 123 zur Aufheizzone 117 des Wärmeträgermediums (Vorwärmer) gefördert wird. Die Möglichkeiten, über den Luftüberschuß oder Rauchgasrückführung, sowie gestufte Verbrennung die Temperatur im Brenngut und die Rauchgastemperatur voneinander zu entkoppeln, so daß trotz der erforderlichen Rauchgastemperatur trocken entascht werden kann, werden als bekannt vorausgesetzt und daher nicht weiter besprochen. Zu erwähnen bleibt noch der Asche-/Schlackestrorn 156, der die Feuerung nach außen verläßt und auf diesem Wege ggf. abgekühlt wird.

Das Wärmeträgermedium wird mit dem Förderorgan 124 unmittelbar zum Vorwärmer 117 gefördert. Das Förderorgan soll für den in mechanischer Hinsicht schonenden Transport heißen Materials unter Minimierung von Wärmeverlusten ausgelegt sein. In erster Linie ist dabei an den Einsatz eines Becherwerkes, eines Rohrkettenförderers oder eines Kübelaufzuges zu denken.

In der vorliegenden, erfindungsgemäßen Ausführung ist der Vorwärmer 117 unmittelbar oberhalb des Reformers 107 angeordnet und von diesem gasseitig durch die Schleuse 118 getrennt. Letztere muß so weit wie möglich gasdicht sein, damit keine Vermischung von Rauchgas und Produktgas eintritt. Bezüglich der Bauart gibt es für die Schleuse 118 keine besonderen Anforderungen. Analog zum Reformer 107 durchströmt das Abgas den Vorwärmer von unten nach oben im Gegenstrom zum Wärmeträgermedium. Dieses tritt mit der Sockeltemperatur des Prozesses von ca. 500 °C oben in den Vorwärmer 117 ein. Diese Socke/temperatur ergibt sich aus der Pyrolyse-Endtemperatur abzüglich einer Temperaturemiedrigung aufgrund von Wärmeverlusten. Wird der Vorwärmer 117 (Analoges gilt für den Reformer 107) groß genug ausgeführt, so können die Förderung 124, sowie die Schleusorgane 118 und 106 nahezu beliebig diskontinuierlich arbeiten.

Das Abgas verläßt den Vorwärmer 117 mit einer geringfügig über der Sokkeltemperatur liegenden Temperatur. In der Regel ist die Abgasmenge deutlich größer als die des Produktgases. Folglich ist die Nutzung der Abwärme des Abgases nach Verlassen des Vorwärmers hier dringend geboten. Dies geschieht bevorzugt durch Vorwärmung der Verbrennungsluft im Luftvorwärmer (LUVO) 125. da auf diese Weise die zurückgewonnene Wärme nach der Verbrennung wieder energetisch nutzbar oberhalb der Sockeltzmperatur von ca. 500 °C wieder zur Verfügung steht. Diese Art der Wärmeverschiebung ist auf dem Wege der Dampferzeugung nicht oder nur mit unverhältnismäßig großem Aufwand darstellbar. Nach dem LUVO 125 sind die abhängig vom Einsatzstoff und den gültigen Emissionsbegrenzungen zu konfigurierende und in ihrer Wirkungsweise an sich bekannte Reinigungsstufe 126 und das Saugzuggebläse 127 angeordnet. Das gereinigte Abgas 157 wird in der Regel in die Umgebung abgegeben, wobei ein Teilstrom 158 in die Feuerung 105 zwecks besserer Temperaturführung zurückgeführt werden kann.

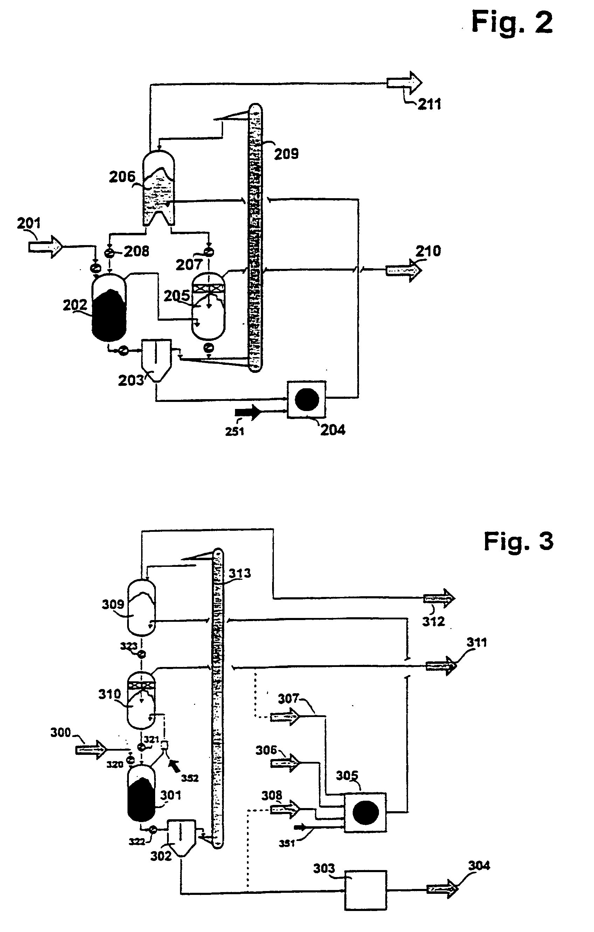

**Fig. 2** zeigt vereinfacht den verfahrenstechnischen Kem der Anlage in der wärmeträgerseitigen Parallelschaltung von zweiter Reaktionszone (Reformer) und Pyrolysereaktor. Der Weg des Einsatzstoffes 201 durch den Pyrolysereaktor 202 und die Trennstufe 203 zur Feuerung 204 (Verbrennungsluft 251) bleibt im wesentlichen gleich. Allerdings befindet sich hier der Reformer 205 neben dem Pyrolysereaktor auf etwa gleicher Höhe, und der die Aufheizzone darstellende Vorwärmer 206 über dem Pyrolysereaktor 202 und dem Reformer 205. Aus dem Vorwärmer 206 wird über die nunmehr zwei angedeuteten Austragstrichter und die unabhängig voneinander betreibbaren Dosierschleusen 207 und 208 das maximal aufgeheizte Wärmeträgermedium parallel in den Reformer 205 und den Pyrolysereaktor 202 gefördert. Das den Reformer 205 verlassende Wärmeträgermedium wird nicht über die Trennstufe 203 geführt. Das durch den Pyrolysereaktor 202 gegangene und in der Trennstufe 203 vom Pyrolysekoks getrennte Wärmeträgermedium und das durch den Reformer 205 gegangene Wärmeträgermedium werden jedoch im Förderorgan 209 gemeinsam in den Vorwärmer 206 verbracht. Bezüglich des Rohproduktgasstromes 210 und des Abgasstromes 211 nach Vorwärmer 206 ist dann jedoch alles genauso wie bei der in Fig. 1 dargestellten Serienschaltung, so daß an dieser Stelle die Darstellung der Parallelschaltung abgebrochen werden kann.

**Fig. 3** zeigt stark vereinfacht einen speziellen Einsatzfall des erfindungsgemäßen Verfahrens am Beispiel der in Fig. 1 gezeigten Serienschaltung, wobei dieser Einsatzfall bei der in Fig. 2 gezeigten Parallelschaltung in entsprechender Weise funktioniert. Hierbei tritt der Einsatzstoff 300 wie gewohnt in den Pyrolysereaktor 301 ein und durchläuft diesen unter Bildung von Pyrolysekoks. Dieser wird jedoch hier in der Trennstufe 302 vom Wärmeträgermedium abgetrennt und über die Abkühlungs- und Konditionierungsstufe 303 als verwertbarer Koks 304 aus dem Prozeß abgezogen und auf beliebige Weise weiter verwendet. Die Stufe 303 kann hierbei beispielsweise ein unter Vakuum stehender Wechselbehälter, aber auch eine Kokstrockenlöschanlage sein. Die Feuerung 305 wird nun mit wenigstens einem der folgenden Brennstoffe zum Zweck der Aufheizung des Wärmeträgermediums verbrannt: einem fremden Brennstoff 306 oder einem Teilstrom Produktgas 307 oder einem Teilstrom Pyrolysekoks 308. Der Brennstoff 306 kann aber auch ein Teilstrom des Einsatzstoffes 300 sein, sofern sich dieser verfeuern läßt. Dies ist insbesondere für das Anfahren einer Anlage nach dem erfindungsgemäßen Verfahren von Bedeutung. Ansonsten kommen eine Vielzahl von gasförmigen, flüssigen oder festen Brennstoffen in Betracht: Soll beispie!sweise das Produktgas als Reduktionsmittel in einem Verhüttungsprozeß genutzt werden, so kann eventuell Gichtgas oder irgendein anderes Schwachgas als Brennstoff 306 eingesetzt werden. In den in Fig. 3 beschriebenen Fällen ist der Standort der Feuerung 305 nicht mehr zwangsläufig in direkter Nähe zur Trennstufe 302, sondern kann etwa in unmittelbare Nähe der Aufheizzone 309 gelegt werden. Der Reformer **310** wird hiervon nicht berührt, ebensowenig die Qualität des Produktgases **311** und die weitere Behandlung des Abgases **312**. In Fig. 3 sind weiterhin gezeigt Die Fördereinrichtung für das Wärmeträgermedium **313**, die Aufgabeschleuse für den Einsatzstoff **320**, die Schleuse zwischen Reformer und Pyrolysereaktor **321**, die Abzugsschteuse aus dem Pyrolysereaktor **322**, die Schleuse zwischen der Aufheizzone und dem Reformer **323**, der Verbrennunastuftstrom **351**, sowie der Prozeßdampfstrom **352**.

Ausführungsbeispiel

In der Vorrichtung gemäß Figur 1 werden 200 kg/h (atro) Holz, d.h. 286 kg/h lufttrockenes Holz mit 30% Feuchte vergast. Das Holz enthalte 2% Asche (wasserfrei) und bestehe ansonsten im wesentlichen aus 50 % Kohlenstoff, 6 % Wasserstoff. 42 % Sauerstoff und 1,9 % Stickstoff, wasser- und aschefrei gerechnet. Der untere Heizwert betrage 18,0 MJ/kg in wasserfreiem Zustand. Die thermische Vergaserleistung betrage folglich 1.000 kW. Die Pyrolyse werde bei 550 °C und das Reforming mit Wasserdampf bei 950 °C durchgeführt. Der Arbeitsdruck ist Atmosphärendruck.

Als Wärmeträgermedium werden Stahlkugeln mit einer Korngröße von ca. 10 mm verwendet. Das Wärmeträgermedium werde zunächst von 500 auf 950 °C aufgeheizt. Aufgrund der erforderlichen Wärmeleistung von 251 kW für die Pyrolyse und das Reforming, sowie zur Abdeckung von Wärmeverlusten betrage die Umlaufmenge des Wärmeträgermediums 4.300 kg/h, also das 21,5-fache des Holzeintrages. Der Pyrolysereaktor ist ein ausgemauerter Schacht mit einer lichten zylindrischen Höhe von 1,3 m und einem lichten Durchmesser von 0,9 m, so daß dem pyrolysierenden Wanderbett eine Verweilzeit von 0,5 Stunden sicher zur Verfügung stehe. In der Pyrolyse werde das Holz so umgesetzt, daß 20 Massenprozent der Trockensubstanz des Holzes als Pyrolysekoks übrigbleiben, also 42 kg/h. Dieser habe einen Ascheanteil von 9.5 % und enthalte auf wasser- und aschefreier Basis 92,2 % Kohlenstoff, 2,6 % Wasserstoff und 5.2 % Sauerstoff. Der Heizwert betrage 29,1 MJ/kg. Die Reformierung laufe bei 950 °C in einer Wärmeträgerschüttung von 0,9 m lichter, zylindrischer Höhe und 0,7 m lichtem Durchmesser ab, so daß eine Gasverweilzeit von 0,5 sec sicher eingehalten wird. Damit wird folgendes Produktgas erhalten:

| | |
|---|---|
| Heizwert | 9, 10 MJ/kg, trocken |
| Wasserstoff | 59,7 Vol.-% tr. |

(fortgesetzt)

| | |
|---|---|
| Kohlenmonoxid | 17,0 Vol.-% tr. |
| Methan | 1,4 Vol.-% tr. |
| Kohlendioxid | 21,9 Vol.-% tr. |
| Wasserdampf | 24,8 Vol.-% |
| Menge | 402 Nm$^3$/h |
| Chem. Enthalpiestrom | 765 kW |

Der Enthalpiestrom des Pyrolysekokses in die Feuerung beträgt 341 kW. Damit wird die Wärme für Reforming, Pyrolyse, Abwassereindampfung aus der Produktgaskühlung und Abdeckung der Wärmeverluste erzeugt und die in der Feuerung benötigte Verbrennungsluft auf 350 °C aufgeheizt. Der Feuerungswirkungsgrad beträgt 80,1%, der Abgasverlust beträgt folglich 68 kW. Die fühlbare Wärme des Produktgases beträgt 168 kW, womit etwa 145 kg/h eines Sattdampfes mit niedrigem Druck erzeugt werden können, wovon 50 kg/h als Prozeßdampf im Reforming benötigt werden, während der Rest anderweitig verwendet werden kann.

[1] US-PS 4,568,362
[2] DE-PS 197 55693
[3] M. Stenseng, A. Jensen, K. Dam-Johansen, M. Grønli: Experimental Investigation and Kinetic Modelting of Biomass Pyrolysis. Proc. 2nd Olle Lindström Symposium, Stockholm 8-11 June 1999, 97-104.

Liste der Bezugszeichen:

101 -   Einsatzstoff
102 -   Fördereinrichtung für Einsatzstoff
103 -   Schleuse
104 -   Pyrolysereaktor
105 -   Feuerung
106 -   Schleuse
107 -   Zweite Reaktionszone (Reformer)
108 -   Separate Leitung für Flüchtige
109 -   zugeführter Prozeßdampf
110 -   Wärmeträgermedium
111 -   Katalysator
112 -   Produktgasstrom
113 -   Abhitzekessel
114 -   Reinigungs- und Konditionierungsstufe
115 -   Ventilator
116 -   gereinigter Produktgasstrom
117 -   Aufheizzone (Vorwärmer)
118 -   Schleuse
120 -   Schleus- und Fördereinheit
121 -   Trennstufe
122 -   Pyrolysekoksstrom
123 -   Heißgasleitung
124 -   Förderorgan

125 - Luftvorwärmer (LUVO)
126 - Reinigungsstufe
127 - Saugzuggebläse
151 - Niedertemperaturwärme
152 - Brüden
153 - Kondensatstrom
154 - Frischwasser
155 - Verbrennungsluft
156 - Asche-/Schlackestrom
157 - gereinigtes Abgas
158 - Teilstrom gereinigtes Abgas

201 - Einsatzstoff
202 - Pyrolysereaktor
203 - Trennstufe
204 - Feuerung
205 - Reformer
206 - Vorwärmer
207 - Dosierschleuse
208 - Dosierschleuse
209 - Förderorgan
210 - Rohproduktgasstrom
211 - Abgasstrom
251 - Verbrennungsluft

300 - Einsatzstoff
301 - Pyrolysereaktor
302 - Trennstufe
303 - Abkühlungs- und Konditionierungsstufe
304 - verwertbarer Koks
305 - Feuerung
306 - fremder Brennstoff
307 - Produktgas
308 - Teilstrom Pyrolysekoks
309 - Aufheizzone (Vorwärmer)
310 - Reformer
311 - Produktgas
312 - Abgas
313 - Fördereinrichtung für das Wärmeträgermedium
320 - Aufgabeschteuse für den Einsatzstoff
321 - Schleuse zwischen Reformer und Pyrolysereaktor
322 - Abzugsschleuse aus dem Pyrolysereaktor
323 - Schleuse zwischen Aufheizzone und Reformer
351 - Verbrennungsluftstrom
352 - Prozeßdampfstrom

**Patentansprüche**

1. Verfahren zur Herstellung eines Produktgases mit hohem Heizwert aus organischen Stoffen oder Stoffgemischen, bei welchem ein im Kreislauf gefahrenes Wärmeträgermedium eine Aufheizzone, eine Reaktionszone , eine Pyrolysezone und eine Trennstufe durchläuft und anschließend in die Aufheizzonne zurückgeführt wird, wobei

- die organischen Stoffe oder Stoffgemische in der Pyrolysezone durch Kontakt mit dem aufgeheizten Wärmeträgermedium in einen festen, kohlenstoffhaltigen Rückstand und Pyrolysegase als flüchtige Phase aufgespalten werden,

- nach Durchlauf der Pyrolysezone der feste, kohlenstoffhaltige Rückstand in der Trennstufe von dem Wärmeträgermedium abgetrennt wird,

- und die Pyrolysegase mit Wasserdampf als Reaktionsmittel vermischt und in der Reaktionszone durch Abtausch eines Teils der im aufgeheizten Wärmeträgermedium enthaltenen Wärme derart nacherhitzt werden, daß ein Produktgas mit hohem Heizwert entsteht,

**dadurch gekennzeichnet,**

- **daß** der Wasserdampf den Pyrolysegasen in der Pyrolysezone zugemischt wird,

- **daß** der gesamte feste, kohlenstoffhaltige Rückstand einer gesonderten Feuerung zugeführt und dort verbrannt wird,

- und **daß** die heißen Abgase dieser Feuerung durch eine in der Aufheizzone befindliche Schüttung des Wärmeträgermediums geführt werden, wobei ein großer Teil der fühlbaren Wärme in definierter Weise an das Wärmeträgermedium abgegeben wird.

2. Verfahren nach Anspruch 1, **dadurch gekennzeichnet, daß** der Wasserdampf den Pyrolysegasen in der Pyrolysezone in der Nähe zum Austrag des Gemisches aus Wärmeträgermedium und festem kohlenstoffhaltigem Rückstand zugemischt wird.

3. Verfahren nach Anspruch 1, **dadurch gekennzeichnet, daß** ein Teil der Pyrolysegase oder des Produktgases in der Feuerung für den kohlenstoffhaltigen Rückstand oder einer separaten Feuerung verbrannt und die dabei freigesetzte Wärme in der Pyrolysezone und der Reaktionszone benutzt wird.

4. Verfahren nach Anspruch 1, **dadurch gekennzeichnet, daß** die Reaktion der Pyrolysegase mit dem Wasserdampf in Gegenwart eines Katalysators durchgeführt wird.

5. Verfahren nach Anspruch 1, **dadurch gekennzeichnet, daß** das Wärmeträgermedium aus feuerfesten Stoffen wie Sand, Kies, Splitt, Aluminosilikat, Korund, Grauwacke, Quarzit oder Cordierit besteht.

**6.** Verfahren nach Anspruch 1, **dadurch gekennzeichnet, daß** das Wärmeträgermedium aus Formkörpem aus metallischen, hierunter bevorzugt magnetischen Materialien oder nichtmetallischen Keramikmaterialien, auch Sintermaterialien oder Eizenerzpellets besteht.

**7.** Verfahren nach Anspruch 1, **dadurch gekennzeichnet, daß** die Gesamtheit des eingesetzten Wärmeträgermediums wenigstens zum Teil aus einem in der Reaktionszone katalytisch aktiven Material besteht.

**8.** Verfahren nach den Ansprüchen 1 und 6, **dadurch gekennzeichnet, daß** die Trennung des Wärmeträgermediums von dem festen, kohlenstoffhaltigen Rückstand nach Verlassen der Pyrolysezone magnetisch erfolgt.

**9.** Verfahren nach Anspruch 1, **dadurch gekennzeichnet, daß** die Trennung des Wärmeträgermediums von dem festen kohlenstoffhaltigen Rückstand nach Verlassen der Pyrolysezone pneumatisch mit Hilfe einer Windsichtung erfolgt, wobei als Sichtermedium bevorzugt Luft, hier wiederum bevorzugt Verbrennungsluft für die Feuerung, oder Abgas, hier wiederum bevorzugt zurückgeführtes Abgas aus der Feuerung, benutzt wird.

**10.** Verfahren nach Anspruch 1, **dadurch gekennzeichnet, daß** die Förderung wenigstens eines der folgenden Medien diskontinuierlich oder schubweise erfolgt: organischer Stoff, Wärmeträgermedium, fester, kohlenstoffhaltiger Rückstand, Gemisch aus Wärmeträgermedium und festem, kohlenstoffhaltigem Rückstand beim Verlassen der Pyrolysezone.

**11.** Verfahren nach Anspruch 1, **dadurch gekennzeichnet, daß** die fühlbare Wärme des Produktgases und des Abgases der Feuerung wenigstens teilweise zur Erzeugung des Wasserdampfes als Reaktionsmittel oder zur Luftvorwärmung für die Feuerung genutzt wird.

**12.** Verfahren nach Anspruch 1, **dadurch gekennzeichnet, daß** die fühlbare Wärme des Produktgases und des Abgases der Feuerung wenigstens teilweise zur Vortrocknung und Aufheizung des organischen Stoffes direkt oder indirekt genutzt wird.

**13.** Verfahren nach Anspruch 1, **dadurch gekennzeichnet, daß** das Wärmeträgermedium nach Durchlaufen der Aufheizzone aufgeteilt wird in einen Teil, der die Reaktionszone durchläuft, und in einen Teil, der unmittelbar in der Pyrolysezone eingesetzt wird, und das Wärmeträgermedium, welches die Reaktionszone durchlaufen hat, in die Pyrolysezone weitergeleitet oder dem restlichen Wärmeträgermedium nach der Pyrolysezone zugegeben wird.

**14.** Verfahren nach Anspruch 1, **dadurch gekennzeichnet, daß** neben dem Wärmeträgermedium ein stark basischer fester Stoff bevorzugt Kalziumoxid, Kalziumhydroxid, Kalziumcarbonat durch die Pyrolysezone geleitet wird, der anschließend ebenfalls vom Wärmeträgermedium abgetrennt und entweder durch die Feuerung oder unmittelbar nach draußen geleitet wird.

**15.** Verfahren nach Anspruch 1, **dadurch gekennzeichnet, daß** das Produktgas abgekühlt und das dabei entstehenden Kondensat gereinigt und zur Erzeugung des Wasserdampfes wieder verwendet oder der Feuerung oder dem Wärmeträgermedium oder dem festen, kohlenstoffhaltigem Rückstand zum Zwecke der Eindampfung und Verbrennung der darin enthaltenen, verbrennlichen Anteile zugegeben wird.

**Claims**

**1.** A process for the production of a product gas with a high calorific value from organic substances or substance mixtures, wherein a circulated heat carrier medium passes through a heating zone, a reaction zone, a pyrolysis zone and a separation stage and is then returned to the heating zone, wherein

- the organic substances or substance mixtures are cracked in the pyrolysis zone by contact with the heated heat carrier medium into a solid carbonaceous residue and pyrolysis gases as a volatile phase,
- after passing through the pyrolysis zone the solid carbonaceous residue is separated from the heat carrier medium in the separation stage,
- and the pyrolysis gases are mixed with water vapour as reactant and in the reaction zone are post-heated by exchange of a part of the heat contained in the heated heat carrier medium in such a way that a product gas with a high calorific value is produced,

  **characterised in that**

- the water vapour is mixed with the pyrolysis gases in the pyrolysis zone,
- all the solid carbonaceous residue is fed to a separate firing operation and calcined there,
- and the hot waste gases from that firing operation are passed through a fill of the heat carrier medium, which is in the heating zone, a large part of the sensible heat being delivered in a defined manner to the heat carrier medium.

2. A process according to claim 1 **characterised in that** the water vapour is added to the pyrolysis gases in the pyrolysis zone in the proximity to the discharge of the mixture of heat carrier medium and solid carbonaceous residue.

3. A process according to claim 1 **characterised in that** a part of the pyrolysis gases or the product gas is calcined in the firing operation for the carbonaceous residue or a separate firing operation and the heat which is liberated **in that** case is used in the pyrolysis zone and the reaction zone.

4. A process according to claim 1 **characterised in that** the reaction of the pyrolysis gases with the water vapour is carried out in the presence of a catalyst.

5. A process according to claim 1 **characterised in that** the heat carrier medium comprises refractory substances such as sand, grit, gravel, aluminosilicate, corundum, greywacke, quartzite or cordierite.

6. A process according to claim 1 **characterised in that** the heat carrier medium comprises shaped bodies of metallic and amongst same preferably magnetic materials or non-metallic ceramic materials, including sintered materials or iron ore pellets.

7. A process according to claim 1 **characterised in that** all of the heat carrier medium used at least partly comprises a material which is catalytically active in the reaction zone.

8. A process according to claims 1 and 6 **characterised in that** separation of the heat carrier medium from the solid carbonaceous residue after leaving the pyrolysis zone is effected magnetically.

9. A process according to claim 1 **characterised in that** separation of the heat carrier medium from the solid carbonaceous residue after leaving the pyrolysis zone is effected pneumatically by means of a wind sifting arrangement, wherein preferably air, in this case once again preferably combustion air for the firing operation, or waste gas, here once again preferably recycled waste gas from the firing operation, is used as the sifting medium.

10. A process according to claim 1 **characterised in that** conveyance of at least one of the following media is effected discontinuously or batchwise: organic substance, heat carrier medium, solid carbonaceous residue, and mixture of heat carrier medium and solid carbonaceous residue, when leaving the pyrolysis zone.

11. A process according to claim 1 **characterised in that** the sensible heat of the product gas and the waste gas from the firing operation is at least partially used for producing the water vapour as reactant or for air preheating for the firing operation.

12. A process according to claim 1 **characterised in that** the sensible heat of the product gas and the waste gas from the firing operation is at least partially used directly or indirectly for predrying and heating the organic substance.

13. A process according to claim 1 **characterised in that** after passing through the heating zone the heat carrier medium is divided into a part which passes through the reaction zone and a part which is used directly in the pyrolysis zone, and the heat carrier medium which has passed through the reaction zone is advanced into the pyrolysis zone or added to the remaining heat carrier medium after the pyrolysis zone.

14. A process according to claim 1 **characterised in that** besides the heat carrier medium a strongly basic solid substance, preferably calcium oxide, calcium hydroxide or calcium carbonate, is passed through the pyrolysis zone, which is then also separated from the heat carrier medium and either passed through the firing operation or directly outwardly.

15. A process according to claim 1 **characterised in that** the product gas is cooled and the condensate which is produced **in that** operation is cleaned and used again for producing the water vapour or added to the firing operation or the heat carrier medium or the solid carbonaceous residue for the purposes of evaporation and calcination of the combustible components contained therein.

**Revendications**

1. Procédé de production d'un produit gazeux avec un fort pouvoir calorique à partir de matières organiques ou mélanges de matières, où un fluide de transfert de chaleur conduit en circuit traverse une zone de chauffage, une zone de réaction, une zone de pyrolyse et un étage de séparation et finalement est ramené dans la zone de chauffage, où

- les matières organiques ou mélanges de matières sont extraits par contact avec le fluide de transfert de chaleur chauffé en un résidu solide contenant du carbone et des gaz de pyrolyse en tant que phase fluide,

- après traversée de la zone de pyrolyse, le résidu solide, contenant du carbone, est séparé dans l'étage de séparation du fluide de transfert de chaleur,

- et les gaz de pyrolyse sont mélangés avec de la vapeur d'eau en tant que fluide de réaction et sont réchauffés dans la zone de réaction après échange d'une partie de la chaleur contenue dans le fluide de transfert de chaleur chauffé de façon qu'il en résulte un gaz produit de fort pouvoir calorique,

**caractérisé en ce que**,

- la vapeur d'eau est mélangée au gaz de pyrolyse dans la zone de pyrolyse,

- **en ce que** la totalité du résidu solide, contenant du carbone, est conduite à une combustion particulière et y est brûlée,

- et **en ce que** les gaz chauds d'échappement de cette combustion sont conduits par une distribution se trouvant dans la zone de chauffe du fluide de transfert de chaleur où une grande partie de la chaleur sensible est donnée d'une manière définie au fluide de transfert de chaleur.

2. Procédé selon la revendication 1, **caractérisé en ce que** la vapeur d'eau est mélangée au gaz de pyrolyse dans la zone de pyrolyse à proximité de la sortie du mélange formé du fluide de transfert de chaleur et du résidu solide contenant du carbone.

3. Procédé selon la revendication 1, **caractérisé en ce qu'**une partie des gaz de pyrolyse ou du gaz produit est brûlé dans la combustion pour le résidu contenant du carbone ou bien une combustion séparée et la chaleur ainsi libérée est utilisée dans la zone de pyrolyse et la zone de réaction.

4. Procédé selon la revendication 1, **caractérisé en ce que** la réaction des gaz de pyrolyse avec la vapeur d'eau est accomplie en présence d'un catalyseur.

5. Procédé selon la revendication 1, **caractérisé en ce que** le fluide de transfert de chaleur se compose de matières solides comme du sable ou du gravier, des pierres concassées, du silicate d'aluminium, du corindon, du grès des houillères, de la quartzite ou de la cordiérite.

6. Procédé selon la revendication 1, **caractérisé en ce que** le fluide de transfert de chaleur se compose de corps en forme, en matériaux métalliques, préférentiellement magnétiques ou matières céramiques non métalliques, en matières frittées ou boulettes de minerai de fer.

7. Procédé selon la revendication 1, **caractérisé en ce que** la totalité du fluide de transfert de chaleur utilisé se compose au moins partiellement d'une matière catalytiquement active dans la zone de réaction.

8. Procédé selon les revendications 1 et 6, **caractérisé en ce que** la séparation du fluide de transfert de chaleur et du résidu solide contenant du carbone se produit magnétiquement après sortie de la zone de pyrolyse.

9. Procédé selon la revendication 1, **caractérisé en ce que** la séparation du fluide de transfert de chaleur et du résidu solide contenant du carbone se produit pneumatiquement à l'aide d'un aspirateur d'air, après avoir quitté la zone de pyrolyse, et en tant que fluide d'aspiration, on utilise préférentiellement de l'air, là de nouveau préférentiellement de l'air de combustion pour la combustion ou du gaz d'échappement et préférentiellement du gaz d'échappement en recirculation provenant de la combustion.

10. Procédé selon la revendication 1, **caractérisé en ce que** la fourniture d'au moins l'un des milieux suivants se produit de manière discontinue ou par poussée: matière organique, fluide de transfert de chaleur, résidu solide, contenant du carbone, mélange du fluide de transfert de chaleur et du résidu solide, contenant du carbone à la sortie de la zone de pyrolyse.

11. Procédé selon la revendication 1, **caractérisé en ce que** la chaleur sensible du gaz produit et du gaz d'échappement de la combustion est utilisée au moins partiellement pour la production de la vapeur d'eau en tant que fluide de réaction ou pour le préchauffage de l'air pour la combustion.

12. Procédé selon la revendication 1, **caractérisé en ce que** la chaleur sensible du gaz produit et du gaz d'échappement de la combustion est utilisée au moins partiellement pour le préséchage et le chauffage de la matière organique, directement ou indirectement.

13. Procédé selon la revendication 1, **caractérisé en ce que** le fluide de transfert de chaleur est réparti après traversée de la zone de chauffage en une partie qui traverse la zone de réaction et une partie qui est utilisée directement dans la zone de pyrolyse et le fluide de transfert de chaleur qui a traversé la zone de réaction est conduit dans la zone de pyrolyse ou est ajouté au reste du fluide de transfert de chaleur après la zone de pyrolyse.

14. Procédé selon la revendication 1, **caractérisé en ce qu'**outre le fluide de transfert de chaleur, une matière solide fortement basique, préférentiellement de l'oxyde de calcium, de l'hydroxyde de calcium, du carbonate de calcium, est conduite à travers la zone de pyrolyse, qui est ensuite également séparée du fluide de trasnfert de chaleur et est conduite soit à travers la combustion ou bien directement vers l'extérieur.

15. Procédé selon la revendication 1, **caractérisé en ce que** le gaz produit est refroidi et **en ce que** le condensa qui en résulte est purifié et est utilisé de nouveau pour la production de la vapeur d'eau ou bien pour la combustion ou bien pour le fluide de transfert de chaleur ou bien le résidu solide contenant du carbone, en vue de l'évaporation ou de la combustion des composants combustibles qui y sont contenus.

**Fig. 1**

EP 1 226 222 B1

**Fig. 1a**

(nachgereicht)

EP 1 226 222 B1

# Fig. 2

# Fig. 3